# FASCICULE DE BREVET EUROPEEN

(11) **EP 1 495 652 B1**
(45) Date de publication et mention de la délivrance du brevet: **23.03.2011**
(21) Numéro de dépôt: 03745827.0
(22) Date de dépôt: 04.04.2003
(51) Int. Cl.: H04W 12/08

(54) **PROCEDE POUR LE CONTROLE DE DROITS D ACCES DANS UN SYSTEME CELLULAIRE DE RADIOCOMMUNICATIONS MOBILES**
VERFAHREN ZUR ZUGRIFFSTEUERUNG IN EINEM ZELLULAREN FUNKKOMMUNIKATIONSSYSTEM
METHOD FOR CONTROLLING ACCESS RIGHTS IN A CELLULAR MOBILE RADIO COMMUNICATION SYSTEM

(30) Priorité: 04.04.2002 FR 0204212
(43) Date de publication de la demande: 12.01.2005
(73) Titulaire: Alcatel Lucent, 75008 Paris (FR)
(72) Inventeur: DREVON, Nicolas, F-75016 Paris (FR)
(74) Mandataire: El Manouni, Josiane
(86) Numéro de dépôt international: PCT/FR2003/001084
(87) Numéro de publication internationale: WO 2003/085866

(56) Documents cités:
- EP-A- 0 462 728
- WO-A-00/51374
- WO-A-01/97548
- US-B1- 6 212 390

## Description

La présente invention concerne d'une manière générale les systèmes de radiocommunications mobiles.

La présente invention est applicable à tout système de radiocommunications mobiles, tels que notamment les systèmes dits de deuxième génération, par exemple de type GSM/GERAN (« Global System for Mobile communications/GSM/EDGE Radio Access Network »), ou les systèmes dits de troisième génération, par exemple de type UMTS (« Universal Mobile Telecommunications System »). D'une manière générale, ces systèmes font l'objet de normalisation; pour plus d'informations on pourra se référer aux normes correspondantes, publiées par les organismes de normalisation correspondants.

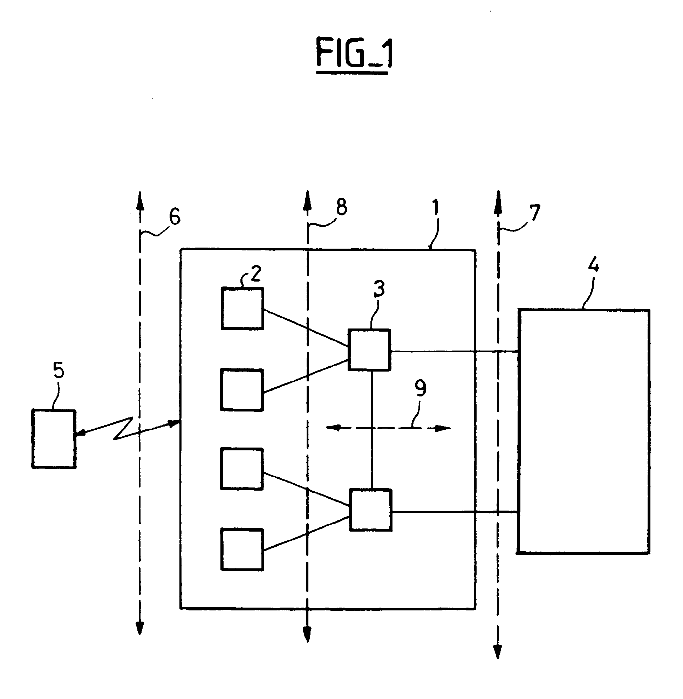

L'architecture de tels systèmes est rappelée sur la figure 1. D'une manière générale un tel système comporte essentiellement :
- un réseau d'accès radio 1, ou RAN (pour « Radio Access Network »),
- un coeur de réseau 4, ou CN (pour « Core Network »).

Le RAN est formé de stations de base telles que 2 et de contrôleurs de stations de base tels que 3. Il est en relation d'une part avec des terminaux mobiles tels que 5, via une interface 6 appelée aussi interface radio, et d'autre part avec le CN 4 via une interface 7. A l'intérieur du RAN, les stations de base communiquent avec les contrôleurs de stations de base via une interface 8. Le RAN est essentiellement chargé de la transmission sur l'interface radio entre réseau et terminaux mobiles, de la gestion des ressources de transmission sur cette interface radio, et de la gestion de la mobilité des terminaux mobiles dans le RAN.

Le CN est en relation d'une part avec le RAN via l'interface 7, et d'autre part avec des réseaux extérieurs, non illustrés spécifiquement. Le CN est essentiellement chargé de l'acheminement et de la gestion des communications de ou vers les terminaux mobiles, et de la gestion de la mobilité des terminaux mobiles entre zones appelées zones de localisation ou LA (pour « Location Area ») et zones de routage ou RA (pour « Routing Area »).

Dans les systèmes de type GSM/GERAN, le RAN est appelé BSS ("Base Station Subsystem"), les stations de base sont appelées BTS ("Base Transceiver Station"), les contrôleurs de stations de base sont appelés BSC ("Base Station Controller"), et les terminaux mobiles sont appelés MS (« Mobile Station »). Le coeur de réseau contient essentiellement des entités ou noeuds de réseau, telles que notamment des entités de type MSC ou 2G-MSC (où 2G est utilisé pour « 2^{nd} Generation » et MSC est utilisé pour « Mobile Switching Center ») ainsi que des entités de type SGSN (« Serving GPRS Serving Node» où GPRS est utilisé pour (« General Packet Radio Service»). L'interface radio est appelé interface « Um », l'interface 7 est appelée interface « A » vers le MSC et « Gb » vers le SGSN, et l'interface 8 est appelée interface « Abis ». Dans les systèmes de type GERAN, une interface 9 entre BSCs est en outre introduite, appelée interface « lurg ». Dans les systèmes de type GERAN, l'interface 7 correspond aux interfaces « A » et « Gb » identiques à celles utilisées en GSM, ou à une interface « lu » identique à celle utilisée en UMTS, ou aux deux simultanément.

Dans les systèmes de type UMTS, le RAN est appelé UTRAN ("UMTS Terrestrial Radio Access Network »), les stations de base sont appelées « Node B », les contrôleurs de stations de base sont appelés RNC ("Radio Network Controller"), et les terminaux mobiles sont appelées UE (« User Equipment »). L'interface radio est appelée « interface Uu », l'interface 7 est appelée interface « lu », l'interface 8 est appelée interface « lub », et une interface 9 entre RNCs est en outre introduite, appelée interface « lur ». Le CN contient également essentiellement des entités ou noeuds de réseau, telles que notamment des entités de type MSC, ou 3G-MSC (où 3G est utilisé pour « 3^{nd} Generation » et MSC est utilisé pour « Mobile Switching Center ») et les entités de type SGSN (« Serving GPRS Serving Node» où GPRS est utilisé pour (« General Packet Radio Service»).

En outre, les systèmes tels que l'UMTS utilisent la technique de transmission en macro-diversité (ou « soft-handover » en anglais), selon laquelle un UE est connecté simultanément à plusieurs stations de base, c'est-à-dire est servi simultanément par plusieurs cellules serveuses (ou cellules actives). Les différents Node B auxquels est connecté un UE peuvent ou non être contrôlés par un même RNC. S'ils sont contrôlés par des RNC différents, un de ces RNC, dit RNC serveur, noté SRNC (pour « Serving RNC » en anglais), a un rôle de contrôle pour la communication considérée, incluant notamment une fonction d'ajout ou de retrait de cellules serveuses. Les Node B connectés à l'UE et non contrôlés par le SRNC communiquent avec le SRNC via les RNC qui les contrôlent, appelés aussi RNC dérivés, ou DRNC (pour « Drift RNC » en anglais) via l'interface « lur ». Indépendamment de la technique de « soft-handover », il est également possible qu'un mobile soit connecté à un Node B non contrôlé par le SRNC à la suite d'un « hard-handover» via l'interface « lur ». Cela est également possible dans le cas du GERAN à la suite d'un « hard-handover» via l'interface lurg où il peut y avoir une Serving BSC et un Drift BSC de la même manière qu'en UMTS.

Un terminal mobile écoute en permanence ou à la demande les canaux balise associés à des cellules environnantes, et effectue des mesures radio sur ces canaux balise. Sur la base de ces mesures le choix d'une meilleure cellule peut être effectué soit par le terminal lui-même, soit par le réseau d'accès radio auquel ces mesures sont alors reportées par le terminal, selon les mécanismes considérés pour le choix d'une meilleure cellule serveuse.

Dans les mécanismes de sélection ou de re-sélection de cellule à l'initiative du terminal, le terminal est capable de reconnaître, d'après les informations diffusées sur les canaux balise, si une nouvelle cellule re-sélectionnée (ou cellule cible) appartient à la même zone de localisation que la cellule serveuse actuelle. Si oui, cette nouvelle cellule devient la nouvelle cellule serveuse. Sinon, le terminal en avise préalablement le réseau, par l'intermédiaire d'une procédure dite de mise à jour de localisation, afin de faire vérifier le droit de l'utilisateur à accéder à la nouvelle cellule. Dans le cas de réponse positive du réseau, l'utilisateur est alors enregistré dans la nouvelle zone de localisation, et cette nouvelle cellule devient la nouvelle cellule serveuse.

Pour étendre la couverture géographique de ces systèmes et/ou les services proposés, il est généralement prévu une pluralité de réseaux ou PLMNs, généralement associés à différents opérateurs. Des accords d'itinérance (ou « roaming agreements ») peuvent être prévus entre les opérateurs concernés, au niveau national et/ou international. On utilise alors habituellement le terme de réseau nominal ou HPLMN (pour « Home PLMN ») pour désigner le réseau avec lequel un utilisateur est en relation d'abonnement, et réseau visité ou VPLMN (pour « Visited PLMN ») pour désigner un réseau différent du HPLMN, sous la couverture duquel se trouve cet utilisateur et avec lequel le HPLMN de cet utilisateur a des accords d'itinérance.

Les accords d'itinérance peuvent être tels que l'accès à un VPLMN est autorisé pour tout ce VPLMN; on parle aussi dans ce cas d'itinérance internationale. Les accords d'itinérance peuvent aussi être tels que l'accès à un VPLMN est limité à certaines zones de ce VPLMN; on parle aussi dans ce cas d'itinérance nationale. De telles zones peuvent par exemple correspondre à des zones pour lequelles le HPLMN ne fournit pas lui-même de couverture radio. Ceci peut être le cas notamment pour des zones géographiques à très faible densité de trafic, ou encore en phase initiale de déploiement d'une infrastructure de nouvelle génération, telle que notamment une infrastructure de troisième génération.

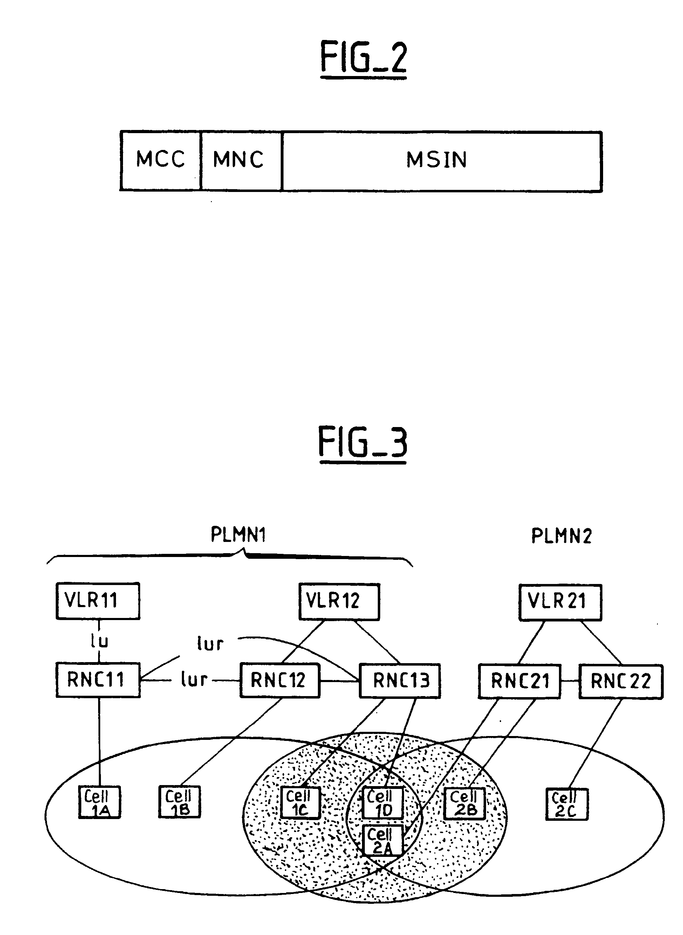

Les droits d'accès sont habituellement contrôlés à partir de données d'identification des abonnés, telles qu'un numéro d'abonné mobile, ou IMSI, pour « International Mobile Subscriber Identity ». Un tel numéro comporte en effet, comme rappelé sur la figure 2, un champ MCC (pour « Mobile Country Code », identifiant un pays, un champ MNC (pour « Mobile Network Code ») identifiant un PLMN à l'intérieur de ce pays, et un champ MSIN (« Mobile Subscriber Identification Number») identifiant un utilisateur à l'intérieur de ce PLMN.

Les informations de droits d'accès peuvent être décomposées en deux types d'informations:
- un premier type d'informations (appelées ici informations d'accords d'itinérance) relatives aux accords d'itinérance nationale ou internationale applicables, identifiables à partir des champs MCC et MNC du numéro IMSI d'abonné mobile,
- un deuxième type d'informations relatives aux abonnements souscrits par les utilisateurs, identifiables à partir du champ MSIN du numéro IMSI d'abonné mobile.

La présente invention concerne plus particulièrement le contrôle des droits d'accès basé sur les accords d'itinérance. Les informations d'accords d'itinérance nécessaires à ce contrôle ne sont généralement pas disponibles dans le terminal ou dans le réseau d'accès radio, mais sont généralement centralisées dans une base de données d'accords d'itinérance, par exemple du type enregistreur de localisation des visiteurs ouVLR (pour « Visitor Location Register ») prévue dans le coeur de réseau, car la gestion et la mise à jour de ces données en sont alors facilitées. Une telle base de données peut être configurée avec les informations correspondantes par des moyens d'O&M (pour « Operation & Maintenance »). On rappelle qu'un VLR peut être lié à une entité de type MSC, ou intégré à une entité de type SGSN.

Comme rappelé précédemment, dans les mécanismes de sélection ou de re-sélection de cellule à l'initiative du terminal, le coeur de réseau est impliqué dans le choix de cellule cible. Le contrôle des droits d'accès à une nouvelle cellule cible, basé sur les accords d'itinérance, ne pose donc pas de problème puisque (comme il vient d'être rappelé) les informations d'accords d'itinérance sont prévues dans le coeur de réseau.

Un problème se pose en revanche pour les mécanismes dans lesquels le coeur de réseau n'est pas impliqué dans le choix de cellule cible, c'est-à-dire pour les mécanismes de choix de cellule cible contrôlé par le réseau d'accès radio, ce qui est le cas notamment des mécanismes de transfert inter-cellulaire (ou « handover »), d'ordre de changement de cellule (ou « cell change order en anglais), ou encore des mécanismes connus en anglais sous le nom de « directed retry».

Deux types de solutions ont été proposées pour résoudre ce problème.

Selon un premier type de solution, il est possible de configurer le réseau d'accès radio avec les informations d'accords d'itinérance, par des moyens d'opération et de maintenance, ou O&M (pour « Operation & Maintenance »). Ainsi que l'a observé le demandeur, une telle solution n'est pas optimale, notamment car elle entraîne le stockage d'une grande quantité d'informations dans le réseau d'accès radio, et elle nécessite une coordination manuelle dans les opérations d'O&M effectuées séparément dans le réseau d'accès radio et dans le coeur de réseau, dans le cas où l'objectif est d'aligner le contrôle des droits d'accès pour les mécansimes de choix de cellule cible dans lesquels le coeur de réseau n'est pas impliqué, sur le contrôle des droits d'accès pour les mécansimes de choix de cellule cible dans lesquels le coeur de réseau est impliqué, notamment en utilisant le même concept de zone de localisation (LA) dans les deux cas.

Selon un deuxième type de solution, il serait possible que le coeur de réseau communique au réseau d'accès radio les informations d'accords d'itinérance, notamment, dans un système tel que l'UMTS ou GSM/GERAN, lors des phases d'établissement ou de re-localisation d'un service support radio ou RAB (pour « Radio Access Bearer »). Ainsi que l'a observé le demandeur, une telle solution présente plusieurs inconvénients. Elle conduit à des messages relativement longs échangés à l'interface entre coeur de réseau et réseau d'accès radio (ou interface « lu dans l'UMTS) d'où une consommation relativement importante de ressources disponible pour la transmission sur cette interface. En outre, puisque la plupart des terminaux mobiles sous couverture d'un même PLMN visité ont les mêmes champs MCC et MNC, les mêmes informations sont alors transférées inutilement un grand nombre de fois.

En outre, ainsi que l'a également observe le demandeur, un autre inconvénient de ce deuxième type de solution est le besoin de configurer un VLR local avec des droits d'accès pour des zones qu'il ne contrôle pas, notamment, dans le cas de systèmes tels que l'UMTS utilisant la transmission en macro-diversité (ou « soft-handover »), le besoin de configurer un VLR local avec les droits d'accès pour tout le HPLMN (et éventuellement pour des cellules voisines de PLMNs voisins). En effet, le cas de transmission en macro-diversité nécessite que le SRNC ait des informations de droits d'accès sur des cellules qu'il ne contrôle pas lui-même, mais qui sont contrôlées par les DRNC. Ceci a notamment pour inconvénients d'être relativement coûteux en termes de volume mémoire nécessaire dans un VLR, de nécessiter une coordination manuelle des opérations d'Q&M effectuées séparément dans chaque VLR, ou encore de ne pas pouvoir utiliser sans modification un VLR déjà configuré avec de telles informations seulement pour les zones qu'il couvre.

Le document US 6 212 390 décrit un système permettant à des fournisseurs de service de définir des zones de mobilité restreinte et de communique cette information à des fournisseurs d'accès qui restreindront alors l'accès de l'utilisateur au système sur la base de ces définitions de mobilisé restreinte fournies par les fournisseurs de service.

La présente invention a notamment pour but d'éviter tout ou partie des inconvénients mentionnés précédemment. Plus généralement, la présente invention a pour but d'optimiser le contrôle de droits d'accès dans de tels systèmes.

Un premier objet de la présente invention est un procédé pour le contrôle de droits d'accès dans un système cellulaire de radiocommunications mobiles, procédé comportant un transfert d'informations d'accords d'itinérance, du coeur de réseau vers le réseau d'accès radio de ce système, procédé dans lequel lesdites informations d'accords d'itinérance sont transférées indépendamment de la gestion de supports d'accès radio à interface entre coeur de réseau et réseau d'accès radio.

Suivant une autre caractéristique, des informations d'accords d'itinérance ainsi transférées sont communes à un sous-ensemble du numéro IMSI (« International Mobile Subscriber Identity ») d'abonné mobile.

Suivant une autre caractéristique, ledit sous-ensemble inclut les champs MCC (« Mobile Country Code ») et/ou MNC (« Mobile Network Code »).

Suivant une autre caractéristique, lesdites informations d'accords d'itinérance sont transférées sur requête du réseau d'accès radio.

Suivant une autre caractéristique, lesdites informations d'accords d'itinérance sont transférées à la demande.

Suivant une autre caractéristique, lesdites informations d'accords d'itinérance sont transférées périodiquement.

Suivant une autre caractéristique, lesdites informations d'accords d'itinérance sont transférées dans le cas de mise à jour.

Suivant une autre caractéristique, le coeur de réseau a été préalablement configuré avec lesdites informations d'accords d'itinérance.

Suivant une autre caractéristique, ladite configuration est effectuée par des moyens d'O & M (« Opération & Maintenance »).

Suivant une autre caractéristique lesdites informations d'accords d'itinérance sont enregistrées dans le coeur de réseau dans une base de données du type enregistreur de localisation des visiteurs (VLR).

Un deuxième objet de l'invention est un procédé pour le contrôle de droits d'accès dans un système cellulaire de radiocommunications mobiles, procédé dans lequel, pour un contrôle de droits d'accès basé sur des accords d'itinérance par un équipement de réseau d'accès radio dit premier équipement de réseau d'accès radio, ledit premier équipement de réseau d'accès radio obtient d'au moins un autre équipement de réseau d'accès radio dit deuxième équipement de réseau d'accès radio, des informations dites de contrôle pour au moins une zone non couverte par ledit premier équipement de réseau d'accès radio.

Suivant une autre caractéristique, ledit premier équipement de réseau d'accès radio obtient d'un équipement de coeur de réseau qui le contrôle, des informations dites de contrôle pour au moins une zone couverte par ledit premier équipement de réseau d'accès radio.

Suivant une autre caractéristique, ledit deuxième équipement de réseau d'accès radio obtient d'un équipement de coeur de réseau qui le contrôle, des informations dites de contrôle pour au moins une zone couverte par ledit deuxième équipement de réseau d'accès radio.

Suivant une autre caractéristique, les informations de contrôle obtenues par un équipement de réseau d'accès radio, d'un équipement de coeur de réseau qui le contrôle, comportent des informations d'accords d'itinérance, permettant audit équipement de réseau d'accès radio d'effectuer un contrôle basé sur des accords d'itinérance pour au moins une zone couverte par ledit équipement de réseau d'accès radio.

Suivant une autre caractéristique, lesdites informations d'accords d'itinérance sont transférées à un équipement de réseau d'accès radio, par un équipement de coeur de réseau qui le contrôle, suivant un procédé selon ledit premier objet de la présente invention.

Suivant une autre caractéristique, lesdites informations de contrôle obtenues par ledit premier équipement de réseau d'accès radio, dudit deuxième équipement de réseau d'accès radio, comportent des informations d'accord d'itinérance permettant audit premier équipement de réseau d'accès radio d'effectuer un contrôle basé sur des accords d'itinérance pour au moins une zone non couverte par ledit premier équipement de réseau d'accès radio.

Suivant une autre caractéristique, lesdites informations de contrôle obtenues par ledit premier équipement de réseau d'accès radio, dudit deuxième équipement de réseau d'accès radio, comportent des informations représentatives d'un contrôle d'accords d'itinérance effectué par le deuxième équipement de réseau d'accès radio pour au moins une zone non couverte par le premier équipement de réseau d'accès radio.

Suivant une autre caractéristique, ledit premier équipement de réseau d'accès radio obtient des informations de contrôle, dudit deuxième équipement de réseau d'accès radio, via une interface reliant ces équipements de réseau d'accès radio.

Suivant une autre caractéristique, ledit premier équipement de réseau d'accès radio obtient des informations de contrôle, dudit deuxième équipement de réseau d'accès radio, via le coeur de réseau.

Suivant une autre caractéristique, lesdits premier et deuxième équipements de réseau d'accès radio appartiennent à un même réseau.

Suivant une autre caractéristique, lesdits premier et deuxième équipements de réseau d'accès radio appartiennent à des réseaux voisins.

Suivant une autre caractéristique, lesdites informations représentatives de contrôle d'accès effectué par ledit deuxième équipement de réseau d'accès radio sont obtenues par ledit premier équipement de réseau d'accès radio dans le cadre d'une procédure dite de « relocation » ou de « handover ».

Un autre objet de la présente invention est un équipement de réseau d'accès radio, comportant des moyens adaptés pour mettre en oeuvre l'un et/ou l'autre desdits procédés.

Notamment, ledit équipement de réseau d'accès radio correspond à un contrôleur de stations de base (RNC).

Un autre objet de la présente invention est un équipement de coeur de réseau, comportant des moyens adaptés pour mettre en oeuvre l'un et/ou l'autre desdits procédés.

Notamment, lesdites informations d'accords d'itinérance étant enregistrées dans un enregistreur de localisation des visiteurs (VLR), ledit équipement de coeur de réseau correspond à un équipement de type centre de commutation mobile (MSC) lié à un enregistreur de localisation des visiteurs (VLR), ou à un équipement de type noeud support GPRS serveur (SGSN) intégrant un enregistreur de localisation des visiteurs (VLR).

Un autre objet de la présente invention est un système de radiocommunications mobiles, comportant des moyens adaptés pour mettre en oeuvre un tel procédé.

D'autres objets et caractéristiques de la présente invention apparaîtront à la lecture de la description suivante d'un exemple de réalisation, faite en relation avec les dessins ci-annexés dans lesquels:
- la figure 1 rappelle l'architecture générale d'un système de radiocommunications mobiles,
- la figure 2 rappelle la structure du numéro IMSI d'abonné mobile,
- la figure 3 est destinée à illustrer un exemple de système mettant en oeuvre un procédé suivant l'invention.

Suivant un de ses différents aspects, la présente invention propose que les informations de droits d'accès qui correspondent à des informations semi-statiques, telles que notamment des informations d'accords d'itinérance, soient transférées indépendamment de la gestion de supports d'accès radio à l'interface entre coeur de réseau et réseau d'accès radio, ou en d'autres termes ne soient pas liées à un utilisateur particulier. On rappelle qu'un support d'accès radio (ou RAB, pour « Radio Access Bearer ») est un ensemble de ressources permettant le transport de données utilisateur et de signalisation, entre un terminal mobile et le coeur de réseau, pour un service donné. On rappelle aussi que la signalisation échangée à l'interface « lu » entre coeur de réseau et réseau d'accès radio inclut notamment une signalisation relative à la gestion de supports d'accès radio (notamment lors des phases d'établissement ou de re-localisation d'un support d'accès radio).

Notamment, la présente invention propose que des informations d'accords d'itinérance transférées soient communes à un sous-ensemble du numéro IMSI (« International Mobile Subscriber Identity ») d'abonné mobile, notamment un sous-ensemble incluant les champs MCC (« Mobile Country Code ») et/ou MNC (« Mobile Network Code »).

Ainsi, la quantité de données nécessaires pour transférer de telles informations du coeur de réseau vers le réseau d'accès radio peut être réduite de manière significative, et de même le volume de mémoire nécessaire pour stocker ces informations dans un VLR peut être réduit de manière significative.

Lesdites informations d'accords d'itinérance transférées à un équipement de réseau d'accès radio peuvent indiquer pour chaque zone (telle qu'une zone de localisation, ou LA) couverte par cet équipement, si elle est autorisée ou interdite pour un ensemble d'abonnés identifiés par un même sous-ensemble de leur numéro IMSI d'abonné mobile.

Les informations d'accords d'itinérance peuvent être transférées sur requête du réseau d'accès radio. Elles peuvent être transmises périodiquement, ou seulement dans le cas de mise à jour.

Les informations ainsi transférées peuvent être transférées par exemple à la suite de la mise en service d'un nouveau noeud du coeur de réseau ou d'un RNC voisin, à la suite du rétablissement de la liaison physique ou virtuelle avec l'un desdits noeuds , ou à chaque modification des accords d'itinérance dans le coeur de réseau ou dans un RNC voisin.

Suivant un autre aspect, la présente invention propose qu'une entité de réseau d'accès radio (telle que notamment une entité de type RNC) s'adresse à une entité de coeur de réseau qui la contrôle (telle que notamment une entité de type MSC/VLR ou encore SGSN) pour obtenir de telles informations d'accords d'itinérance pour des zones qu'elle couvre, et s'adresse à d'autres entités de réseau d'accès radio pour obtenir de telles informations d'accords d'itinérance pour des zones qu'elle ne couvre pas (ces autres entités de réseau d'accès radio obtenant elles-mêmes respectivement ces informations, d'entités de coeur de réseau qui les contrôlent). Ainsi le volume d'informations à stocker dans un VLR peut être réduit de manière significative, puisqu'il suffit de configurer un VLR avec des informations d'accords d'itinérance pour les zones qu'il couvre, et non pour toutes les zones couvertes par le PLMN considéré. En d'autres termes encore, un VLR déjà configuré avec de telles informations peut être utilisé sans aucun changement pour de tels mécanismes de contrôle d'accès à une cellule cible.

De manière optionnelle, les informations d'accords d'itinérance ainsi transférées à un équipement de réseau d'accès radio peuvent en outre comporter des informations d'accords d'itinérance relatives à des cellules voisines appartenant à au moins un PLMN voisin avec lequel le PLMN considéré a des accords d'itinérance.

Une autre possibilité, dans le cas où il n'y a pas d'interface « lur » avec un équipement de réseau d'accès radio voisin pouvant notamment appartenir à un PLMN voisin, et dans le cas de mécanisme mettant en oeuvre une procédure dite de « Relocation » (ou changement de RNC serveur) dans le cas de l'UMTS, ou de « handover » dans le cas du GSM/GERAN ou de l'inter-système UMTS-GSM, consiste à faire contrôler les droits d'accès par l'équipement de réseau d'accès radio cible sur la base du numéro IMSI d'abonné mobile.

De manière générale, et pour regrouper sous une définition commune les différents cas de figure possibles, un autre aspect de l'invention concerne un procédé dans lequel, pour un contrôle de droits d'accès basé sur des accords d'itinérance par un équipement de réseau d'accès radio dit premier équipement de réseau d'accès radio, ledit premier équipement de réseau d'accès radio obtient d'au moins un autre équipement de réseau d'accès radio dit deuxième équipement de réseau d'accès radio, des informations dites de contrôle pour au moins une zone non couverte par ledit premier équipement de réseau d'accès radio.

Avantageusement, ledit premier équipement de réseau d'accès radio obtient d'un équipement de coeur de réseau qui le contrôle, des informations dites de contrôle pour au moins une zone couverte par ledit premier équipement de réseau d'accès radio.

Avantageusement, ledit deuxième équipement de réseau d'accès radio obtient d'un équipement de coeur de réseau qui le contrôle, des informations dites de contrôle pour au moins une zone couverte par ledit deuxième équipement de réseau d'accès radio.

Notamment, les informations de contrôle obtenues par un équipement de réseau d'accès radio, d'un équipement de coeur de réseau qui le contrôle, comportent des informations d'accords d'itinérance, permettant audit équipement de réseau d'accès radio d'effectuer un contrôle basé sur des accords d'itinérance pour au moins une zone couverte par ledit équipement de réseau d'accès radio.

Avantageusement, lesdites informations d'accords d'itinérance sont transférées à un équipement de réseau d'accès radio, par un équipement de coeur de réseau qui le contrôle, suivant un procédé selon ledit premier objet de la présente invention.

Suivant une possibilité, lesdites informations de contrôle obtenues par ledit premier équipement de réseau d'accès radio, dudit deuxième équipement de réseau d'accès radio, comportent des informations d'accord d'itinérance permettant audit premier équipement de réseau d'accès radio d'effectuer un contrôle basé sur des accords d'itinérance pour au moins une zone non couverte par ledit premier équipement de réseau d'accès radio.

Suivant une autre possibilité, lesdites informations de contrôle obtenues par ledit premier équipement de réseau d'accès radio, dudit deuxième équipement de réseau d'accès radio, comportent des informations représentatives d'un contrôle d'accords d'itinérance effectué par ledit deuxième équipement de réseau d'accès radio pour au moins une zone non couverte par le premier équipement de réseau d'accès radio.

Suivant une possibilité, ledit premier équipement de réseau d'accès radio obtient des informations de contrôle, dudit deuxième équipement de réseau d'accès radio, via une interface reliant ces équipements de réseau d'accès radio.

Suivant une autre possibilité, ledit premier équipement de réseau d'accès radio obtient des informations de contrôle, dudit deuxième équipement de réseau d'accès radio, via le coeur de réseau.

Suivant une possibilité, lesdits premier et deuxième équipements de réseau d'accès radio appartiennent à un même réseau.

Suivant une autre possibilité, lesdits premier et deuxième équipements de réseau d'accès radio appartiennent à des réseaux voisins.

Avantageusement, lesdites informations représentatives de contrôle d'accès effectué par ledit deuxième équipement de réseau d'accès radio sont obtenues par ledit premier équipement de réseau d'accès radio dans le cadre d'une procédure dite de « relocation » dans le cas de l'UMTS ou de « handover » dans les cas du GSM/GERAN et de l'inter-système UMTS-GSM.

La figure 3 est destinée à illustrer un exemple de système pouvant mettre en oeuvre un procédé suivant l'invention.

Sur la figure 3 sont illustrées à titre d'exemple :
- des cellules notées CELL1A, CELL1B, CELL1C, CELL1D appartenant à un premier PLMN noté PLMN1, et des cellules notées CELL2A, CELL2B, CELL2C appartenant à un deuxième PLMN noté PLMN2,
- des équipements de réseau d'accès radio, en l'occurrence des équipements de type RNC, à titre d'exemple RNC11 contrôlant la cellule Cell 1A, RNC12 contrôlant la cellule Cell 1 B, RNC13 contrôlant les cellules Cell1C et Cell1D, RNC21 contrôlant les cellules Cell 2A et Cell 2B, et RNC22 contrôlant la cellule Cell 2C,
- des équipements de type VLR prévus dans le coeur de réseau, à titre d'exemple VLR11 contrôlant RNC11, VLR12 contrôlant RNC12 et RNC13, et VLR21 contrôlant RNC21 et RNC22.

Sur la figure 3 est considéré à titre d'exemple le cas où, à partir d'une cellule serveuse constituée par la cellule Cell 1 D, est mis en oeuvre un mécanisme de choix de cellule cible contrôlé par le réseau d'accès radio, la cellule cible étant choisie parmi des cellules voisines de la cellule Cell 1 D, incluant les cellules Cell 1C, Cell 2A, Cell 2B. Dans cet exemple, le RNC serveur (RNC13) contrôlant la cellule serveuse Cell 1 D contient alors des informations nécessaires pour le contrôle des droits d'accès à l'une ou l'autre des cellules Cell 1C, Cell 2A, Cell 2B.

Selon l'invention, et dans cet exemple, RNC13 obtient de VLR12 :
- des informations d'accords d'itinérance pour les zones couvertes par RNC13 (incluant la cellule Cell 1 C),
- optionnellement, des informations d'accords d'itinérance pour les cellules Cell 2A, Cell 2B, non couvertes par RNC13 mais correspondant à des cellules voisines appartenant à un PLMN voisin (PLMN2) avec lequel PLMN1 a des accords d'itinérance.

Une autre possibilité, notamment dans le cas où il n'y a pas d'interface « lur » avec un RNC voisin (tel que RNC21 dans cet exemple) pouvant notamment appartenir à un PLMN voisin, et dans le cas de mécanisme mettant en oeuvre une procédure dite de « Relocation » (ou changement de RNC serveur, dans cet exemple de RNC13 vers RNC21) ou de « handover » inter-RNC (dans cet exemple de RNC13 vers RNC21) consiste à faire contrôler les droits d'accès par le RNC cible (dans cet exemple RNC21) sur la base du numéro IMSI d'abonné mobile, et à transmettre au RNC source (dans cet exemple RNC13) des informations représentatives du contrôle de droits d'accès effectué par le RNC cible.

De manière connue, la procédure de « Relocation » comporte les échanges de messages suivants :
- message « Relocation Required » transmis du RNC source (dans cet exemple RNC13) vers le CN,
- message « Relocation Request » transmis du CN vers le RNC cible (dans cet exemple RNC21) vers le CN,
- message « Relocation Request Acknowledgement» transmis du RNC cible (dans cet exemple RNC21) vers le CN,
- message « Relocation Command » transmis du CN vers le RNC source (dans cet exemple RNC13).

La présente invention propose alors que des informations représentatives d'un contrôle de droits d'accès effectué par le RNC cible soit incluses dans le message « Relocation Request Acknowledgement» transmis du RNC cible vers le CN, puis dans le message « Relocation Command » transmis du CN vers le RNC source.

En outre, pour le cas de « soft-handover » ou de « hard-handover » via l'interface « lur », pour lequel RNC13 aurait un rôle de RNC serveur, ainsi que pour le cas de « relocation » ou de « handover » via le coeur de réseau, RNC13 obtiendrait de RNC12:
- des informations d'accords d'itinérance pour les zones couvertes par RNC12 et éventuellement ses voisines.

En outre, pour le cas de « soft-handover » ou de « hard-handover » via l'interface « lur », pour lequel RNC13 aurait un rôle de RNC serveur, ainsi que pour
le cas de « relocation » ou de « handover » via le coeur de réseau, RNC13 obtiendrait de RNC 11 :
- des informations d'accords d'itinérance pour les zones couvertes par RNC11 et éventuellement ses voisines.

Les mêmes principes peuvent être appliqués pour tout RNC autre que RNC13 pris ci-dessus à titre d'exemple.

Seulement à titre d'exemple, afin d'illustrer le transfert d'accords d'itinérance entre coeur de réseau et RNC, et entre deux RNCs, il est possible d'utiliser les mécanismes connus des procédures « Information Exchange Initiation» et « Information Reporting». Les dites procédures utilisent l'interface « lur » et peuvent être introduites sur l'interface « lu ».

De manière connue, la procédure de « Information Exchange Initiation » comporte les échanges de messages suivants :
- message « Information Exchange Initiation Request» transmis par exemple du RNC11 vers par exemple le RNC12,
- message « Information Exchange Initiation Response» transmis du RNC12 vers le RNC11 comme réponse.

De manière connue, la procédure de « Information Reporting» comporte le message « Information Report» transmis par exemple du RNC12 vers le RNC11.

L'extension des procédures procédures « Information Exchange Initiation» et « Information Reporting» sur l'interface « lu » peut se faire de la manière suivante:

La procédure de « Information Exchange Initiation » comporte les échanges de messages suivants :
- message « Information Exchange Initiation Request» transmis d'un RNC vers un noeud du coeur de réseau,
- message « Information Exchange Initiation Response» transmis d'un nopeud du coeur de réseau vers le RNC comme réponse.

De manière connue, la procédure de « Information Reporting» comporte le message « Information Report» transmis du coeur de réseau vers le RNC.

L'exemple illustré sur la figure 3 correspond plus particulièrement au cas de l'UMTS (respectivement GERAN), où les échanges entre VLR et RNC (respectivement BSC) se font via l'interface « lu » (respectivement « A » ou « lu ») et où les échanges entre RNC se font via l'interface « lur » (respectivement « lurg »).

La présente invention n'est bien entendu pas limitée aux exemples décrits précédemment, et d'autres exemples seraient bien entendu possibles, sans sortir du cadre de la présente invention. En outre, la figure 3 ne représente que schématiquement un exemple de système dans lequel peut être mise en oeuvre un procédé suivant l'invention, et sans entrer par ailleurs dans le détail des procédés ou protocoles de transmission et de signalisation, qui peuvent par ailleurs faire appel à des principes classiques dans ces systèmes.

La présente invention a également pour objet, outre un procédé de contrôle de droits d'accès (tel que décrit ci-dessus), un système de radiocommunications mobiles, un équipement de réseau d'accès radio, et un équipement de coeur de réseau, tous comportant des moyens adaptés pour mettre en oeuvre un procédé suivant l'invention. De tels moyens peuvent opérer suivant le procédé décrit précédemment; leur réalisation particulière ne présentant pas de difficulté particulière pour l'homme du métier, de tels moyens ne nécessitent pas d'être décrits ici de manière plus détaillée que ce qui a été fait précédemment, par leur fonction.

Les avantages de la présente invention sont notamment les suivants :
- pas de changements nécessaires dans les tables d'accords d'itinérance dans les VLR,
- coordination automatique entre VLRs,
- mises à jour automatiques dans l'UTRAN lorsqu'une modification est effectuée dans n'importe quel VLR d'un PLMN,
- mises à jour automatiques des tables RNS (« Radio Network Subsystem ») lorsqu'un nouveau RNC est ajouté dans l'UTRAN,
- minimisation de la quantité de données transférée à partir du CN,
- des informations semi-statiques ne sont plus transférées via des messages reliés à des appels ou à des UEs.

## Revendications

1. Procède pour le contrôle de droits d'accès dans un système cellulaire de radiocommunications mobiles, procédé comportant un transfert d'informations d'accords d'itinérance, du coeur de réseau vers le réseau d'accès radio de ce système, procédé dans lequel lesdites informations d'accords d'itinérance sont transférées indépendamment de la gestion de supports d'accès radio à l'interface entre coeur de réseau et réseau d'accès radio, lesdites informations d'accord d'itinérance transférées n'étant pas liées à un utilisateur particulier.

2. Procédé selon la revendication 1, dans lequel des informations d'accords d'itinérance ainsi transférées sont communes à un PLMN (« Public Land Mobile Network ») identifié par un sous-ensemble du numéro IMSI (« International Mobile Subscriber Idéntity ») d'abonné mobile.

3. Procédé selon la revendication 1 ou 2, dans lequel ledit sous-ensemble inclut les champs MCC (« Mobile Country Code ») et MNC (« Mobile Network Code »).

4. Procédé selon lune des revendications 1 à 3, dans lequel lesdits accords d'itinérance sont tels que l'accès à un VPLMN (« Visited Public Land Mobile network ») est autorisé pour tout le PLMN ou limite à certaines zones de ce VPLMN.

5. Procédé selon la revendication 4, dans lequel lesdites zones dudit VPLMN correspondent à des zones pour lesquelles le HPLMN (« Home Public Land Mobile Network ») ne fournit pas lui-même de couverture radio.

6. Procédé selon l'une des revendications 1 à 5, dans lequel les informations d'accord d'itinérance transférées sont indiquées pour chaque zone de localisation ou LA (« Location Area »).

7. Procédé selon l'une des revendications 1 à 6, dans lequel lesdites informations d'accords d'itinérance sont transférées dans le cas de modification desdites informations dans le coeur de réseau.

8. Procédé selon l'une des revendications 1 à 7, dans lequel le coeur de réseau a été préalablement configuré avec lesdites informations d'accords d'itinérance.

9. Procédé selon la revendication 8, dans lequel ladite configuration est effectuée par des moyens d'O & M (« Opération & Maintenance »).

10. Procédé selon l'une des revendication 1 à 9, dans lequel lesdites informations d'accords d'itinérance sont enregistrées dans le coeur de réseau dans une base de données du type enregistreur de localisation des visiteurs (VLR).

11. Equipement de réseau d'accès radio comportant des moyens pour recevoir d'un équipement de coeur de réseau des informations d'accord d'itinérance, lesdites informations transférées dudit équipements de coeur de réseau vers ledit équipement de réseau d'accès radio, lesdites informations d'accord d'itinérance étant transférées indépendamment de la gestion de supports d'accès radio à interface entre coeur de réseau et réseau d'accès radio, lesdites informations d'accord d'itinérance transférées n'étant pas liées à un utilisateur particulier.

12. Equipement de réseau d'accès radio selon la revendication 11, dans lequel des informations d'accords d'itinérance ainsi transférées sont communes a un HPLMN (« Public Land Mobile Network ») identifié par un sous-ensemble du numéro IMSI (« International Mobile Subscriber Identity ») d'abonné mobile.

13. Equipement de réseau d'accès radio selon la revendication 11 ou 12, dans lequel ledit sous-ensemble inclut les champs MCC (« Mobile Country Code») et MNC (« Mobile Network Code »).

14. Equipement de réseau d'accès radio selon lune des revendications 1 à 13, dans lequel lesdits accords d'itinérance sont tels que l'accès à un VPLMN (« Visited Public Land Mobile network ») est autorisé pour tout le PLMN ou limité à certaines zones de ce VPLMN.

15. Equipement de réseau d'accès radio selon la revendication 14, dans lequel lesdites zones dudit VPLMN correspondent à des zones pour lequelles le HPLMN (« Home Public Land Mobile Network ») ne fournit pas lui-même de couverture radio.

16. Equipement de réseau d'accès radio selon l'une des revendications 11 à 15, dans lequel les informations d'accord d'itinérance transférées sont indiquées pour chaque zone de localisation ou LA (« location Area »).

17. Equipement de réseau d'accès radio selon l'une des revendications 11 à 16, dans lequel lesdites informations d'accords d'itinérance sont transférées dans le cas de modification desdites informations dans le coeur de réseau.

18. Equipement de réseau d'accès radio selon l'une des revendications 11 à 17, dans lequel le coeur de réseau a été préalablement configuré avec lesdits informations d'accords d'itinérance.

19. Equipement de réseau d'accès radio selon la revendication 18, dans lequel ladite configuration est effectuée par des moyens d'O & M (« Opération & Maintenance »).

20. Equipement de réseau d'accès radio selon l'une des revendications 11 à 19, dans lequel lesdites informations d'accords d'itinérance sont enregistrées dans le coeur de réseau dans une base de données du type enregistreur de localisation des visiteurs (VLR).

21. Equipement de réseau d'accès radio selon l'une des revendications 11 à 20, correspondant à un contrôleur de stations de base (RNC).

22. Equipement de coeur de réseau comportant des moyens pour transférer des informations d'accord d'itinérance à un équipement de réseau d'accès radio, lesdites informations transférées dudit équipement de coeur de réseau vers ledit équipement de réseau d'accès radio, lesdites informations d'accord d'itinérance étant transférées indépendamment de la gestion de supports d'accès radio à l'interface entre coeur de réseau et réseau d'accès radio, lesdites informations d'accord d'itinérance transférées n'étant pas liées à un utilisateur particulier.

23. Equipement de coeur de réseau selon la revendication 22, dans lequel des informations d'accords d'itinérance ainsi transférées sont communes à un PLMN (« Public Land Mobile Network») identifié par un sous-ensemble du numéro IMSI (« International Mobile Subscriber Identity ») d'abonné mobile.

24. Equipement de coeur de réseau selon la revendication 22 ou 23, dans lequel ledit sous-ensemble inclut les champs MCC (« Mobile Country Code ») et MNC (« Mobile Network Code »).

25. Equipement de coeur de réseau selon l'une des revendications 22 à 24, dans lequel lesdits accords d'itinérance sont tels que l'accès à un VPLMN («Visited Public Land Mobile network») est autorisé pour tout le PLMN ou limité à certaines zones de ce VPLMN.

26. Equipement de coeur de réseau selon la revendication 25, dans lequel lesdites zones dudit VPLMN correspondent à des zones pour lequelles le HPLMN (« Home Public Land Mobile Network ») ne fournit pas lui-même de couverture radio:

27. Equipement de coeur de réseau selon l'une des revendications 26 à 30, dans lequel les informations d'accord d'itinérance transférées sont indiquées pour chaque zone de localisation ou LA (« Location Area »).

28. Equipement de coeur de réseau selon l'une des revendications 22 à 27, dans lequel lesdites informations d'accords d'itinérance sont transférées dans le cas de modification desdites informations dans le coeur de réseau.

29. Equipement de coeur de réseau selon l'une des revendications 22 à 28, dans lequel le coeur de réseau a été préalablement configuré avec lesdites informations d'accords d'itinérance.

30. Equipement de coeur de réseau selon la revendication 29, dans lequel ladite configuration est effectuée par des moyens d'O & M (« Opération & Maintenance »).

31. Equipement de coeur de réseau selon l'une des revendications 22 à 30, dans lequel lesdites informations d'accords d'itinérance sont enregistrées dans le coeur de réseau dans une base de données du type enregistreur de localisation des visiteurs (VLR).

32. Equipement de coeur de réseau selon l'une des revendications 22 à 31, dans lequel, lesdites informations d'accords d'itinérance étant enregistrées dans un enregistreur de localisation des visiteurs (VLR), lédit équipement de coeur de réseau correspond à un équipement de type centre de commutation mobile (MSC) lié à un enregistreur de localisation des visiteurs (VLR).

33. Equipement de coeur de réseau selon l'une des revendications 22 à 31, dans lequel, lesdites informations d'accords d'itinerance étant enregistrées dans un enregistreur de localisation des visiteurs (VLR), ledit équipement de coeur de réseau correspond a un équipement de type noeud supports GPRS serveur (SGSN) intégrant un enregistreur de localisation des visiteurs (VLR).

34. Système de radiocommunications mobiles, comportant des moyens pour transférer des informations d'accord d'itinérance d'un équipement de coeur de réseau vers un équipement de réseau d'accès radio, lesdites informations d'accord d'itinérance étant transférées indépendamment de la gestion de supports d'accès radio à l'interface entre coeur de réseau et réseau d'accès radio, lesdites informations d'accord d'itinérance transférées n'étant pas liées à un utilisateur particulier.

## Claims

1. A method of controlling access rights in a cellular mobile radio system, including transfer of roaming agreement information from a core network to a radio access network of said system, in which method said roaming agreement information is transferred independence of the management of radio access bearers at the interface between the core network and the radio access network, and said transferred roaming agreement information not being linked to a particular user.

2. A method according to claim 1, wherein roaming agreement information transferred in this way is common to a public land mobile network (PLMN) identified by a subset of the international mobile subscriber identity (IMSI) number.

3. A method according to claim 1 or 2, wherein said subset includes a mobile country code field (MCC) and a mobile network code (MNC) field.

4. A method according to any one of claims 1 to 3, wherein according to said roaming agreements access to a visited public land mobile network (VPLMN) is authorized for the whole PLMN or limited to certain areas of said VPLMN

5. A method according to claim 4, wherein said areas of said VPLMN are areas in which the home public land mobile network (HPLMN) does not itself provide radio coverage.

6. A method according to any one of claims 1 to 5, wherein the routing agreement information transferred is indicated for each location area (LA).

7. A method according to any one of claims 1 to 6, wherein said roaming agreement information is transferred in the event of modification of said information in the core network.

8. A method according to any one of claims 1 to 7, wherein the core network is configured beforehand with said roaming agreement information.

9. A method according to claim 8, wherein said configuration is effected by operation & maintenance (O&M) means.

10. A method according to any one of claims 1 to 9, wherein said roaming agreement information is stored in the core network in a database of the visitor location register (VLR) type.

11. Radio access network equipment comprising means for receiving roaming agreement information from a core network equipment, said information being transferred from said core network equipment to said radio access network equipment, said roaming agreement information being transferred independently of the management of radio access bearers at the interface between the core network and the radio access network, and said transferred roaming agreement information not being linked to a particular user,

12. Radio access network equipment according to claim 11, wherein roaming agreement information transferred in this way is common to a PLMN ("Public Land Mobile Network") identified by a subset of the mobile subscriber's IMSI ("International Mobile Subscriber Identity") numbed.

13. Radio access network equipment according to claim 11 or 12, wherein said subset includes the MCC ("Mobile Country Code") and MNC ("Mobile Network Code") fields.

14. Radio access network equipment according to one of claims 11 to 13, wherein said roaming agreements are such that access to a VPLMN ("Visited Public Land Mobile network") is authorized for the entire PLMN or limited to certain areas of that VPLMN.

15. Radio access network equipment according to claim 14, wherein said areas of said VPLMN correspond to areas for which the HPLMN ("Home Public Land Mobile Network") does not itself provide radio coverage.

16. Radio access network equipment according to one of claims 11 to 15, wherein the transferred roaming agreement information is indicated for each LA ("Location Area").

17. Radio access network equipment according to one of claims 11 to 16, wherein said roaming agreement information is transferred in the event of modification of said information in the core network.

18. Radio access network equipment according to one of claims 11 to 17, wherein the core network has previously been configured with said roaming agreement information.

19. Radio access network equipment according to claim 18, wherein said configuration is carried out by O&M ("Operation & Maintenance") means.

20. Radio access network equipment according to one of claims 1 to 19, wherein said roaming agreement information is stored in the core network in a database of the visitor location register (VLR) type.

21. Radio access network equipment according to one of claims 11 to 20 corresponding to a base station controller (RNC),

22. Core network equipment comprising means for transferring roaming agreement information to a radio access network equipment, said information being transferred from said core network equipment to said radio access network equipment, said roaming agreement information being transferred independently of the management of radio access bearers at the interface between the core network and the radio access network, and said transferred roaming agreement information not being linked to a particular user.

23. Core network equipment according to claim 22, wherein roaming agreement information transferred in this way is common to a PLMN ("Public Land Mobile Network") identified by a subset of the mobile subscribes IMSI ("International Mobile Subscriber Identity") number.

24. Core network equipment according to claim 22 or 23, wherein said subset includes the MCC ("Mobile Country Code") and MNC ("Mobile Network Code") fields.

25. Core network equipment according to one of the claims 22 to 24, wherein said roaming agreements are such that access to a VPLMN ("Vistted Public Land Mobile Network") is authorized for the entire PLMN or limited to certain areas of that VPLMN.

26. Core network equipment according to claim 25, wherein said areas of said VPLMN correspond to areas for which the HPLMN ("Home Public Land Mobile Network) does not itself provide radio coverage.

27. Core network equipment according to one of claims 26 to 30, wherein the transferred roaming agreement information is indicated for each LA ("Location Area"),

28. Core network equipment according to one of claims 22 to 27, wherein said roaming agreement information is transferred in the event of change of said information in the core network.

29. Core network equipment according to one of claims 22 to 28, wherein the core network has previously been configured with said roaming agreement information.

30. Core network equipment according to claim 29, wherein said configuration is carried out by O&M ("Operation & Maintenance") means.

31. Core network equipment according to one of claims 22 to 30, wherein said roaming agreement information is stored in the core network in a database of the visitor location register (VLR) type.

32. Core network equipment according to one of claims 22 to 31, wherein, said roaming agreement information being stored in a visitor location register (VLR), said core network equipment corresponds to mobile switching center (MSC) equipment I associated with a visitor location register (VLR),

33. Core network equipment according to one of claims 22 to 31, wherein, said roaming agreement information being stored in a visitor location register (VLR), said core network equipment corresponds to a server GPRS support node (SGSN) incorporating a visitor location register (VLR).

34. A mobile radio system, comprising means for transferring roaming agreement information from a core network equipment to a radio access network equipment, said roaming agreement information being transferred independently of the management of radio access bearers at the interface between the core network and the radio access network, and said transferred roaming agreement information not being linked to a particular user,

## Patentansprüche

1. Verfahren zur Kontrolle von Zugangsrechten in einem zellularen Mobilfunkkommunikationssystem, wobei das Verfahren die Übermittlung von Informationen über Roaming-Abkommen vom Netzmerkkern an das Funkzugangsnetzwerk dieses Systems umfasst, wobei im Rahmen des Verfahrens die besagten Informationen über Roaming-Abkommen unabhängig von der Verwaltung von Funkzugangsträgern an der Schnittstelle zwischen dem Netzvlierkkern und dem Funkzugangsnetzwerk Übermittelt werden, wobei die besagten übermittelten Informationen über Roaming-Abkommen nicht an einen bestimmten Benutzer gebunden sind.

2. Verfahren nach Anspruch 1, wobei derart übermittelte Informationen über Roaming-Abkommen einem durch eine Untergruppe der IMSI-Nummer ("International Mobile Subscriber Identity") eines mobilen Teilnehmers identifizierten PLMN ("Public Land Mobile Network") gemeinsam sind.

3. Verfahren nach Anspruch 1 oder 2, wobei die besagte Untergruppe MMC ("Mobile Country Code")- und MNC ("Mobile Network Code")-Felder umfasst.

4. Verfahren nach einem der Ansprüche 1 bis 3, wobei die besagten Roaming-Abkommen derart gestaltet sind, dass der Zugang zu einem VPLMN ("Visited Public Land Mobile network") für das gesamte PLMN genehmigt oder auf bestimmte Zonen dieses VPLMN beschränkt ist.

5. Verfahren nach Anspruch 4, wobei die besagten Zonen des besagten VPLMN Zonen entsprechen, für weiche das HPLMN ("Horne Public Land Mobile Network") nicht selbst eine Funkabdeckung bereitsietit.

6. Verfahren nach einem der Ansprüche 1 bis 5, wobei die übermittelten Informationen über Roaming-Abkommen für jeden Aufenthaltsbereich oder LA ("Location Area") angegeben werden,

7. Verfahren nach einem der Ansprüche 1 bis 6, wobei die besagten Informationen über Roaming-Abkommen im Fall einer Änderung der besagten Informationen im Netzwerkkern übermitelt werden.

8. Verfahren nach einem der Ansprüche 1 bis 7, wobei der Netzwerkkern zuvor mit den besagten Informationen über Roaming-Abkommen konfiguriert worden ist.

9. Verfahren nach Anspruch 8, wobei die besagte Konfiguration anhand von O & M ("Operation & Maintenance")-Mitteln durchgeführt wird.

10. Verfahren nach einem der Ansprüche 1 bis 9, wobei die besagten Informationen über Roaming-Abkommen im Netzwerkkern In einer Datenbank vom Typ Aufenthaitsregister (VLR) abgelegt werden.

11. Funkzugangsnetzwerk-Vorrichtung mit Mitteln für den Empfang von Informationen über Roaming-Abkommen von einer Netzwerkkern-Vorrichtung, wobei die besagten Informationen von der besagten Netzwerkkern-Vorrichtung an die besagte Funkzugangsnetzwerk-Vorrichtung übermittelt werden, wobei die besagten Informationen über Roaming-Abkommen unabhängig von der Verwaltung von Funkzugangsträger an der Schnittstelle zwischen dem Netzwerkkern und dem Funkzugangsnetzwerk übermittelt werden, wobei die besagten Informationen über Roaming-Abkommen nicht an einen bestimmten Benutzer gebunden sind.

12. Fünkzugangsnetzwerk-Vorrichtung nach Anspruch 11, wobei die derart übermittelten Informationen über Roaming-Abkommen einem durch eine Untergruppe der IMSI-Nummer ("International Mobile Subscriber Identity") eines mobilen Teilnehmers identifizierten PLMN ("Public Land Mobile Network") gemeinsam sind.

13. Funkzugangsnetzwerk-Vorrichtung nach Anspruch 11 oder 12, wobei die besagte Untergruppe MMC ("Mobile Country Code")- und MNC ("Mobile Network Code")-Felder umfasst

14. Funkzugangsnetzwerk-Vorrichtung nach einem der Ansprüche 11 bis 13, wobei die besagten Roamins-Abkommen derart gestaltet sind, dass der Zugang zu einem VPLMN ("Visited Public Land Mobile network") für das gesamte PLMN genehmigt oder auf bestimmte Zonen dieses VPLMN beschränkt ist.

15. Funkzugangsnetzwerk-Vorrichtung nach Anspruch 14, wobei die besagten Zonen des besagen VPLMN Zonen entsprechen, für welche das HPLMN ("Home Public Land Mobile Network") nicht selbst eine Funkabdeckung bereitstellt.

16. Funkzugangsnetzwerk-Vorrichtung nach einem der Ansprüche 11 bis 15, wobei die übermittelten Informationen über Roaming-Abkommen für jeden Aufenthaltsbereich oder LA ("Location Area") angegeben werden.

17. Funkzugangsnetzwerk-Vorrichtung nach einem der Ansprüche 11 bis 16, wobei die besagten Informationen über Roaming-Abkommen im Fall einer Änderung der besagten Informationen im Netzwerkkern übermittelt werden.

18. Funkzugangsnetzwerk-Vorrichtung nach einem der Abkommen 11 bis 17, wobei der Netzwerkkern zuvor mit den besagten Informationen über Roaming-Abkommen konfiguriert worden ist.

19. Funkzugangsnetzwerk-Vorrichtung nach Anspruch 18, wobei die besagte Konfiguration anhand von O & M ("Operation & Maintenance")-Mitteln durchgeführt wird,

20. Funkzugangsnetzwerk-Vorrichtung nach einem der Ansprüche 11 bis 19, wobei die besagten Informationen über Roaming-Abkommen im Netzwerkkern in einer Datenbank vom Typ Aufenthaltsregister (VLR) abgelegt werden.

21. Funkzugangsnetzwerk-Vorrichtung nach einem der Ansprüche 11 bis 20, wobei die Vorrichtung einer Basisstation-Steuereinrichtung (RNC) entspricht.

22. Netzwerkkern-Vorrichtung mit Mitteln zur Übermittlung von Informationen über Roaming-Abkommen an eine Funkzugangsnetzwerk-Vorrichtung, wobei die besagten Informationen von der besagten Metzwerkkern-Vorrichtung an die besagte Funkzugangsnetzwerk-Vorrichtung übermittelt werden, wobei die besagten Informationen über Roaming-Abkommen unabhängig von der Verwaltung von Funkzugangsträgern an der Schnittstelle zwischen dem Netzwerkkern und dem Funkzugangsnetzwerk übermittelt werden, wobei die besagten übermittelten Informationen über Roaming-Abkommen nicht an einen bestimmten Benutzer gebunden sind.

23. Netzwerkkern-Vorrichtung nach Anspruch 22, wobei die derart übermittelten über Roaming-Abkommen einem durch eine Untergruppe der IMSI-Nummer (.International Mobile Suscriber Identity") eines mobilen Teilnehners identifizierten PLMN ("Public Land Mobile Network") gemeinsam sind.

24. Netzwerkkern-Vorrichtung nach Anspruch 22 oder 23, wobei die besagte Untergruppe MMC ("Mobile Country Code")- und MNC ("mobile Network Code")-Felder umfasst

25. Netzwerkkern-Vorrichtung nach einem der Ansprüche 22 bis 24, wobei die besagten Roaming-Abkommen derart gestaltet sind, dass der Zugang zu einem VPLMN ("Visited Public Land Moblie network") für das gesamte PLMN genehmigt oder auf bestimmte Zonen dieses VPLMN beschränkt list.

26. Netzwerkkern-Vorrichtung nach Anspruch 25, wobei die besagten Zonen des besagten VPLMN Zonen entsprechen, für welche das HPLMN ("Home Public Land mobile Network") nicht selbst eine Funkabdeckung bereitstellt.

27. Netzwerkkern-Vorrichtung nach einem der Ansprüche 26 bis 30, wobei die übermittelten Informationen über Roaming-Abkommen für jeden Aufenthaltsbereich oder LA ("Location Area") angegeben werden,

28. Netzwerkkern-Vorrichtung nach einem der Ansprüche 22 bis 27, wobei die besagten Informationen über Roaming-Abkommen im Fall einer Änderung der besagten Informationen im Netzwerkkern übermittelt werden.

29. Netzwerkkern-Vorrichtung nach einem der Ansprüche 22 bis 28, wobei der Netzwerkkern zuvor mit den besagten Informationen über Roaming-Abkommen konfiguriert worden ist.

30. Netzwerkkern-Vorrichtung nach Anspruch 29, wobei die besagte Konfiguration anhand von O & M ("Operation & Maintenance")-Mitteln durchgeführt wird.

31. Netzwerkkern-Vorrichtung nach einem der Ansprüche 22 bis 30, wobei die besagten Informationen über Roaming-Abkommen im Netzwerkkern in einer Datenbank vom Typ Aufenthaftsregister (VLR) abgelegt werden,

32. Netxwerkkern-Vorrichtung nach einem der Ansprüche 22 bis 31, wobei die besagten informationen über Roaming-Abkommen in einem Aufenthaltsregister (VLR) abgelegt werden, wobei die gesagte Netzwerkkern-Vorrichtung einer Vorrichtung vom Typ mobile Vermittlungsstelle (MSC), welche mit einem Aufenthaltsregister (VLR) verbunden ist, entspncht.

33. Netzwerkkern-Vorrichtung nach einem der Ansprüche 22 bis 31, wobei die besagten Informationen über Roaming-Abkommen in einem Aufenthattsregister (VLR) abgelegt werden, wobei die besagte Netzwerkkern-Vorrichtung einer Vorrichtung vom Typ GPRS-Trägerknoten (SGSN), welcher ein Aufenthaltsregister (VLR) integriert, entspricht

34. System für die Mobilfunkkommunikation mit Mitteln zur Übermittlung von Informationen über Roaming-Abkommen von einer Netzwerkkern-Vorrichtung an eine Funkzugangsnetzwerk-Vorrichtung, wobei die besagten Informationen über Roaming-Abkommen unabhängig von der Verwaltung von Funkzugangsträgern an der Schnittstelle zwischen dem Netzwerkkern und dem Funkzugangsnetzwerk übermittelt werden, wobei die besagten übermittelten informationen über Roaming-Abkommen nicht an einen bestimmten Benutzer gebunden sind,
